# EUROPEAN PATENT SPECIFICATION

(11) **EP 0 526 789 B1**
(45) Date of publication and mention of the grant of the patent: **25.09.1996**
(21) Application number: 92112292.5
(22) Date of filing: 18.07.1992
(51) Int. Cl.: G03B 27/58, G03B 17/30, G03C 3/00

(54) **Flexible light-shielding enclosure and method for enclosing photosensitive web end**
Biegsame Lichtabschirmhülle und Verfahren zum Umhüllen des Endes von photoempfindlichem Bandmaterial
Enveloppe souple de protection contre la lumière et procédé pour enfermer le bout d'une bande de matériau photosensible

(30) Priority: 31.07.1991 US 738709; 31.07.1991 US 738710
(43) Date of publication of application: 10.02.1993
(73) Proprietor: EASTMAN KODAK COMPANY, Rochester, New York 14650-2201 (US)
(72) Inventor: Clark, William Frank, c/o EASTMAN KODAK COMPANY, Rochester, New York 14650-2201 (US); Huber, Robert Allen, c/o EASTMAN KODAK COMPANY, Rochester, New York 14650-2201 (US); Evans, Michael Allen, c/o EASTMAN KODAK COMPANY, Rochester, New York 14650-2201 (US); Waldman, Jaime Ira, c/o EASTMAN KODAK COMPANY, Rochester, New York 14650-2201 (US); Healey, Thomas Charles, c/o EASTMAN KODAK COMPANY, Rochester, New York 14650-2201 (US)
(74) Representative: Blickle, K. Werner, Dipl.-Ing.

(56) References cited:
- EP-A- 0 198 124
- GB-A- 185 097
- GB-A- 704 971
- US-A- 4 832 197

## Description

### BACKGROUND OF THE INVENTION

### Field of the Invention

The present invention relates generally to protective enclosures and method for enclosing photosensitive material, and particularly to a flexible light-shielding enclosure adapted to protect an end portion of photosensitive web material projecting from a light-tight container.

### Description of the Prior Art

Photosensitive film rolls conventionally have been supplied to film-using apparatus, such as microfilmers, in roll-containing cartridges. The leading end of the outermost convolution of the film roll has been tape-spliced to the trailing end of a flexible opaque leader, which has then been wrapped around the roll, threaded through a cartridge exit slot, folded back, and then taped to the cartridge exterior. The leader, when so applied, has provided both a means for withdrawing the film end from the cartridge and a means for preventing light-piping into the cartridge. However, the added bulk of the film-to-leader splice has sometimes caused the splice to fail when pulled through the constricted exit slot, thereby causing the leader to become separated from the film end and the entire film roll to be lost inside the cartridge. In any event, even when the splice has not failed, and has pulled the film end out of the cartridge, the user has then removed the splicing tape and discarded the leader before threading the film end into the apparatus. For a standard 105mm-wide (4.133 inches) film roll used with microfilmers, the typical acetate-based leader has been at least 760mm (30 inches) long. Discarding such a leader in every instance has therefore entailed a significant amount of material waste.

GB-A-704 971 discloses a refill roll of film for a cassette wherein the refill includes a cover strip laid over a terminal portion of the film roll. A cover strip is doubled back about a fold to produce a flap which is tucked behind the face of the film. The film, cover strip, and flap are then wound together on a spool and held closed by a sealing strip carried by the folded end of the cover strip.

Pertinent in the published prior art is US-A-4,455,076 which discloses a daylight-loadable cassette comprising a roll of photosensitive film that is wound upon a flanged spool with its leading end connected to a wider opaque leader, the leader being wrapped around the film in covering relation thereto, with its lateral edges angled radially outwardly and light-tightly against the opposing inward-facing surfaces of the spool flanges to protect the film from ambient light. While the cassette there disclosed may be satisfactory in some applications, it nonetheless poses the same drawbacks described above with reference to use of a spliced leader.

There has thus existed a persistent, long-felt, but unresolved need for a more efficient, reliable, and convenient alternative to the spliced-leader method of enabling film withdrawal from, and preventing light-piping into, a film-roll container.

### SUMMARY OF THE INVENTION

The primary object of this invention has been to meet the foregoing need. That object and others have been achieved by the invention defined by claim 1 and claim 4.

This invention finds utility in combination with a photosensitive web roll located inside a light-tight container having an exit slot through which the photosensitive web is withdrawable from the container. A flexible enclosure is provided for light-shielding a leading end portion of the web extending from the roll through the exit slot and outside the container.

The enclosure comprises a flexible, substantially rectangular, opaque sleeve adapted to enclose the web end portion. The sleeve includes opposing top and bottom walls disposed in adjacent, registered, facing relationship and extending between front and rear ends and opposite lateral sides thereof. The walls are light-tightly joined together along their front ends and lateral sides, but are left unjoined and separable along their rear ends to provide an opening therebetween through which the web end portion can be inserted into the sleeve toward the joined front ends. The sleeve, with the web end portion so inserted therein, extends outwardly from within the container, through the exit slot, and thence outside the container.

This invention, and its objects and advantages, will become more apparent in the detailed description of its preferred embodiment presented hereinbelow.

### BRIEF DESCRIPTION OF THE DRAWINGS

In the detailed description of the preferred embodiment of this invention presented below, reference is made to the accompanying drawings, wherein like reference characters denote like elements, and wherein:
Fig. 1 is a side-elevation view of a photosensitive web roll as rotatably mounted in a cartridge, with half of the cartridge housing removed and shown to the right thereof, depicting a protective sleeve enclosing the web roll end and projecting outside the cartridge;
Fig. 2 is a top-plan view of the protective sleeve shown in Fig. 1, as adapted, in accordance with the preferred embodiment of this invention, to light-shieldingly enclose the otherwise exposed photosensitive web roll end;
Fig. 3 is an exploded perspective view depicting opposing top and bottom wall portions of the protective sleeve of Fig. 2 as disposed in registered, facing relationship;
Fig. 4 is a perspective view of an elongate extruded-plastic tube from which the protective sleeve of Fig. 2 may be formed;
Fig. 5 is a perspective view of the tube shown in Fig. 4 after being flattened to form the sleeve of Fig. 2;
Fig. 6 is a perspective view of the flattened tube depicted in Fig. 5 after being cut to length and sealed at one end to thereby form the sleeve of Fig. 2;
Fig. 7 is a perspective view of the cartridge of Fig. 1, with both halves of the cartridge housing fully assembled, showing the protective sleeve as enclosing the web roll end and projecting outside the cartridge through an exit slot therein; and
Fig. 8 is a perspective view similar to Fig. 7 but illustrating the protective sleeve as folded and held against the cartridge housing by a removable cover member.

### DESCRIPTION OF THE PREFERRED EMBODIMENT

Because certain parts of photosensitive web enclosures are well known, the following description is directed in particular to those elements forming, cooperating directly with, or relating to, this invention. Elements not specifically shown or described herein are selectable from those known in the relevant art.

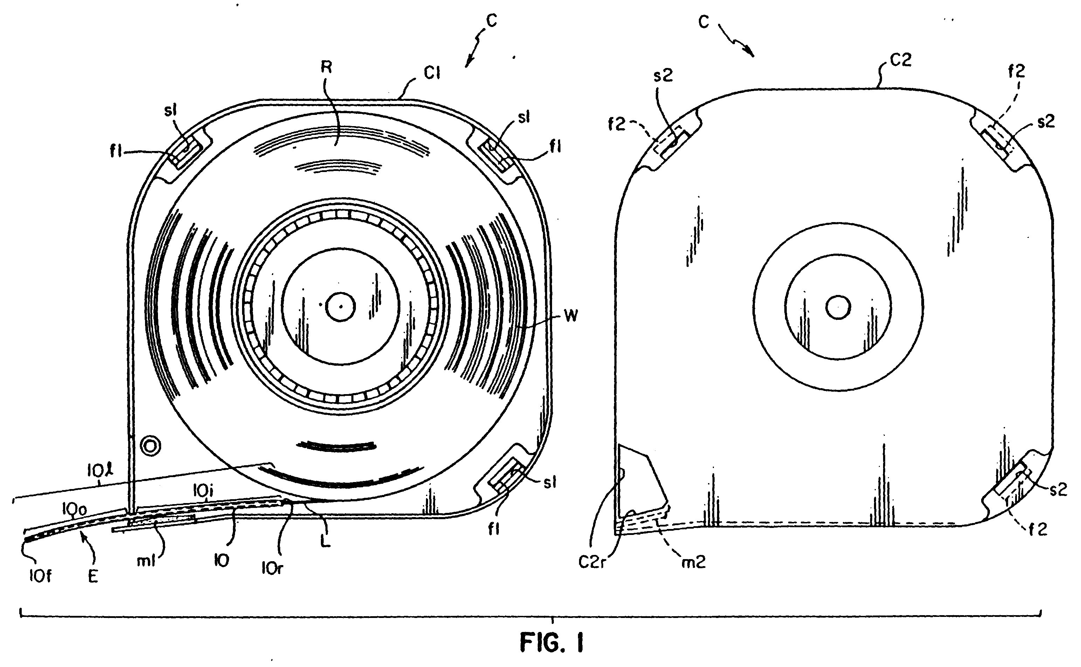

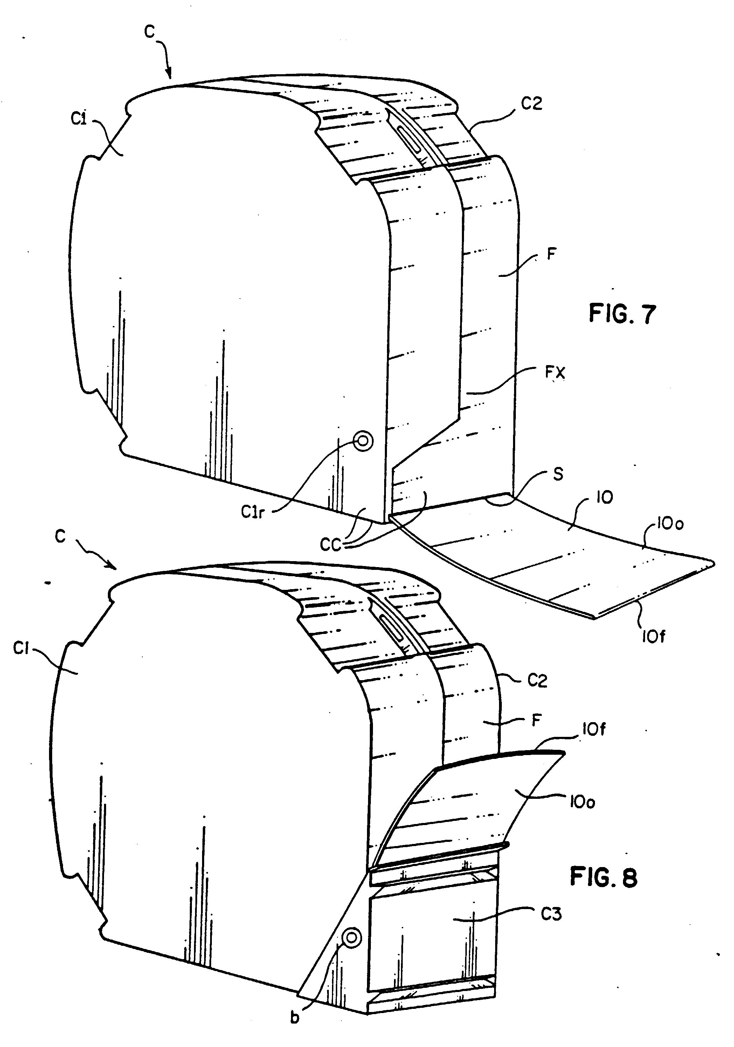

Fig. 1 illustrates a photosensitive web roll R that is rotatably mounted inside an open container or cartridge C comprising a pair of matable cartridge housing halves C1 and C2. Web roll R is depicted as mounted in housing half C1, the other housing half C2 being superposable over housing half C1 and tightly secured thereto by latch fingers f1 on housing half C1 engageable with matable slots s2 in housing half C2, and by corresponding latch fingers f2 on housing half C2 engageable with matable slots s1 in housing half C1. In the lower-left corners of housing halves C1 and C2 (as viewed in Fig. 1) are strips of soft, compliant, light-locking material m1 and m2, respectively, which extend transversely below and above, respectively, a web-withdrawal path leading from the web roll to a cartridge exit slot S (see Fig. 7) formed at the bottom of front wall F of the assembled cartridge C.

Fig. 1 shows a leading end portion L of the outermost convolution of photosensitive web W on roll R as it extends tangentially from the roll along the web-withdrawal path. To protect web W from ambient light outside the cartridge, its leading end portion L is sheathed in a flexible enclosure E. Enclosure E comprises a flexible, rectangular, opaque sleeve 10 specifically adapted to enclose the web end portion L.

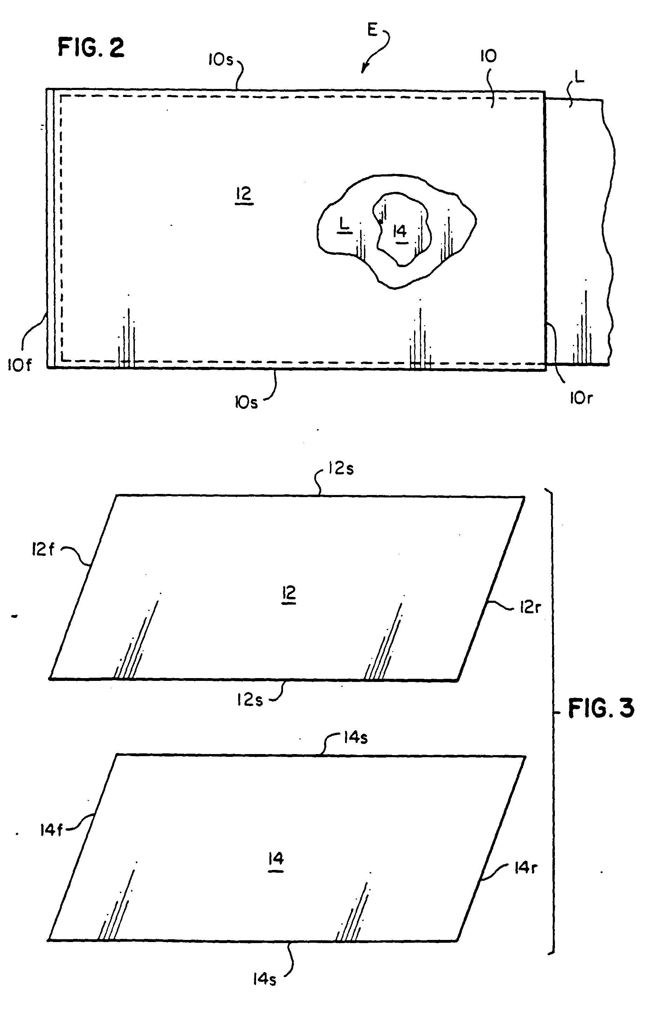

As illustrated in Figs. 2 and 3, sleeve 10 has opposing top and bottom walls 12 and 14, respectively, disposed in adjacent, registered, facing relation to each other. Top wall 12 extends between front and rear ends 12f and 12r, respectively, and between opposite lateral sides 12s thereof. Bottom wall 14 similarly extends between front and rear ends 14f and 14r, respectively, and between opposite lateral sides 14s thereof. Walls 12 and 14 are light-tightly joined together along their front ends 12f, 14f and lateral sides 12s, 14s, but are left unjoined and separable along their rear ends 12r, 14r, thereby providing sleeve 10 with a closed front or leading end 10f, closed lateral sides 10s, and an open rear or trailing end 10r.

As indicated in Fig. 2, the web leading end portion L is inserted into sleeve 10 through its open trailing end 10r and is moved longitudinally inside the sleeve toward its closed leading end 10f to a position therein (shown in broken lines) near that end. The web roll R is then rotatably mounted in cartridge housing half C1 so that sleeve 10, with web end portion L so positioned therein, extends outwardly from within that housing half through and beyond the exit-slot location, as depicted in Fig. 1. Cartridge housing half C2 is then superposed upon and secured to housing half C1 as described above, thereby closing the cartridge with sleeve 10 projecting outwardly through exit slot S and light-shielding the enclosed web end portion L, as shown in Fig. 7.

When so disposed (see Fig. 1), sleeve 10 has rearward and forward portions 10i and 10o thereof respectively located inside and outside the cartridge. Rearward portion 10i extends from trailing end 10r, near roll R inside the cartridge, to the exit slot; forward portion 10o extends from the exit slot to leading end 10f outside the cartridge. Sleeve 10 thus has an overall length 10ℓ, extending from trailing end 10r to leading end 10f, which comprises the sum of its rearward and forward portions 10i and 10o. Preferably, the rearward portion 10i is approximately one-half to two-thirds of the overall length 10ℓ, while the forward portion 10o is approximately one-half to one-third of the overall length 10ℓ.

To protect the outwardly projecting forward portion 10o during packaging, transport, storage, and handling, the forward portion is folded upwardly just outside exit slot S and rearwardly toward cartridge front wall F, and then secured to an exterior surface Fx of wall F (see Fig. 7). A convenient and effective way of doing that is to mount a triangular-shaped cover member C3 that is removably mountable on an exit-slot corner portion CC of the cartridge in close covering relation to slot S and surface Fx (see Figs. 7 and 8).

Cover member C3 is made of flexible plastic, with an inwardly projecting boss b formed on one end wall thereof so as to mate with a corresponding recess C1r on one side of the cartridge corner portion CC, and with an inwardly protruding detent on the opposite end wall (not shown) engageable with a mating recess C2r (see Fig. 1) on the other side of corner portion CC.

From a position beneath the projecting sleeve portion 10o (as viewed in Fig. 7), cover member C3 is first moved upwardly and rearwardly toward corner portion CC, folding sleeve portion 10o in the process, and is then pushed onto the corner portion until its boss b and opposite detent engage the corner portion recesses C1r and C2r respectively, at which point the cover member is removably mounted on the cartridge corner portion in close covering relation to exit slot S and exterior surface Fx, thereby securing the folded sleeve portion 10o against surface Fx, as shown in Fig. 8.

To remove the cover member from the corner portion, its end walls are flexed laterally outward to disengage the boss and detent thereon, whereupon the cover member is simply pulled away. With the cover member removed, the projecting sleeve portion 10o can be grasped and sleeve 10 then withdrawn from the web end portion L therein, to render the web end portion accessible for its intended connection to cooperating apparatus.

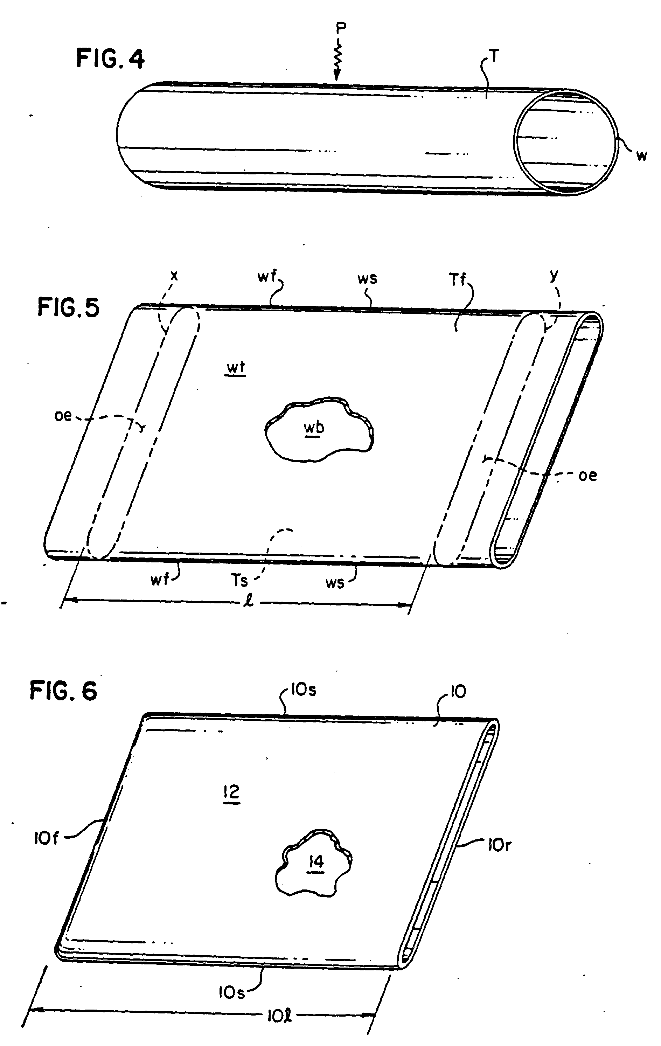

The opposing top and bottom walls 12 and 14 of sleeve 10 are made of a thin, flexible, opaque, plastic sheet material such as black, linear, low-density polyethylene approximately (0.004 inches) 0,102mm thick. With particular reference to Figs. 4-6, an efficient way of forming sleeve 10 with such walls is to: (1) extrude an elongate tube T having a continuous, substantially cylindrical, thin, flexible wall w of opaque plastic, such as the above-described polyethylene; (2) flatten the tube T, as by application of a suitable compressive force P thereon, to provide a flattened tube Tf having substantially flat, closely facing top and bottom wall portions wt and wb, respectively, that are seamlessly joined by folds wf extending longitudinally along opposite lateral sides ws thereof; (3) cut the flattened tube Tf along longitudinally spaced lines x and y transverse to lateral sides ws to provide a substantially rectangular sleeve Ts of predetermined length ℓ between opposite open ends oe thereof; seal one of the open ends oe closed to provide the aforementioned closed leading end 10f of sleeve 10; and leave the other open end oe open to provide the aforementioned open trailing end 10r of sleeve 10. The resulting sleeve 10 as formed by this method is depicted in Fig. 6.

For a standard 105mm-wide (4.133 inches) film roll, sleeve 10 may satisfactorily be made about 107mm (4.2 inches) wide and about 208mm (8.2 inches) long. In this case, the aforementioned rearward portion 10i of sleeve length 10ℓ would be about one-half to two-thirds of the 208mm (8.2 inches) sleeve length, or about 104mm (4.1 inches) to 139mm (5.5 inches), while the aforementioned forward portion 10o of sleeve length 10ℓ would be about one-half to one-third of the 208mm (8.2 inches) sleeve length, or about 104mm (4.1 inches) to 69mm (2.7 inches).

Extensive testing of such a sleeve has proven that the aforementioned primary object of this invention has been met. The light-shielding sleeve efficiently provides both a convenient and reliable means for withdrawing a web end from its container and an effective means for preventing ambient light from piping back through the web end into the container, all with no risk of any splice failure causing loss of the web roll inside the container, and with a substantial reduction in the amount of material that must be discarded as waste or recycled.

Although the present invention has been described with particular reference to its preferred embodiment illustrated herein, it will be understood by those skilled in the art that variations and modifications thereof could be effected and still fall within the scope of this invention as defined by the claims thereto now set forth hereinbelow.

## Claims

1. A cartridge comprising a light-tight container (C), a photosensitive web roll (R) rotatably mounted inside said light-tight container, and a flexible enclosure (E), said light tight container having an exit slot (S) through which said photosensitive web is withdrawable from said light-tight container, said flexible enclosure light-shielding a leading end portion (L) of said web extending from said roll through said exit slot to the outside of said container, said enclosure comprising a flexible, substantially rectangular, opaque sleeve (10) adapted to enclose said web leading end portion, said sleeve including opposing top (12) and bottom (14) walls disposed in adjacent, registered, facing relationship and extending between their front and rear ends (12f, 12r, 14f, 14r) and opposite lateral sides (12s, 14s) thereof; characterized by:
- said walls (12, 14) being light-tightly joined together along their front ends (12f, 14f) and said lateral sides (12s, 14s) but being left unjoined and separable along said rear ends (12r, 14r) to provide an opening therebetween through which said web leading end portion is insertable into said sleeve toward said joined front ends, said sleeve, with said web leading end portion so inserted therein, extending outwardly from within said container, through said exit slot, and thence outside said container, said sleeve including rearward (10i) and forward (10o) portions disposed within and without said container respectively, an exit-slot cover member (C3) mounted on said container in covering relation to said exit slot (S) and extending over the exterior surface F(x) of the container, said forward portion of said sleeve extending from said exit slot being folded back at said exit slot and secured against said exterior surface (Fx) of said container by said exist-slot cover member, said exit-slot cover member being readily removable from said container to facilitate withdrawal of said sleeve and said web therefrom.

2. The cartridge claimed in Claim 1 wherein said rearward portion (10i) extends from said wall rear ends (12r, 14r) near said roll (R) in said container to said exit slot (S), said forward portion (10o) extends from said exit slot to said joined front ends (12f, 14f) outside said container; and wherein said sleeve has an overall length (101) extending from said rear ends to said front ends, and wherein said rearward portion of said sleeve extending from said rear ends to said exits slot is approximately one-half to two-thirds of said overall length, while said forward portion of said sleeve extending from said exit slot to said front ends is approximately one-half to one-third of said overall length.

3. The cartridge claimed in Claim 1, wherein said sleeve walls are made of thin, flexible, opaque, plastic sheet material; and wherein said sheet material is approximately 0.004 inches (0,102 mm) thick.

4. A method of light-shielding a leading end portion (L) of a photosensitive web from a photosensitive web roll (R), the photosensitive web roll being rotatably mounted inside a light-tight container (C) of a cartridge, the light-tight container having an exit slot (S) through which the photosensitive web from the roll is withdrawable, the web leading end portion extending outwardly through and beyond the exit slot, comprising the steps of:
- forming a flexible, substantially rectangular, opaque sleeve (S) with top (12) and bottom (14) walls that lie in adjacent, registered, facing relationship and extend between their front and rear ends (12f, 12r, 14f, 14r) and opposite lateral sides (12s, 14s) thereof, said sleeve having an overall length (101) extending between said front and rear ends thereof, said walls being light-tightly joined together along their front ends (12f, 14f) and lateral sides (12s, 14s) but left unjoined and separable along their rear ends (12r, 14r), thereby providing the sleeve with a closed leading end, closed lateral sides, and an open trailing end;
- inserting the web leading end portion into the sleeve through said open trailing end and moving the inserted end portion longitudinally inside the sleeve toward said closed leading end to a position therein near said leading end;
- mounting the roll (R) in said container (C) so that the sleeve, with said web leading end portion therein, has rearward (10i) and forward (10o) portions disposed within and without said container respectively, said rearward portion extending from the sleeve trailing end near the roll inside said container to said exit slot, the forward portion extending from said exit slot to the sleeve leading end outside said container, said roll being mounted in said container such that said sleeve rearward portion is approximately one-half to two-thirds of the overall length of said sleeve while said sleeve forward portion is approximately one-half to one-third of said overall length;
- closing said container;
- providing an exit-slot cover member (C3) that is removably mountable on said container in close covering relation to said exit slot and said exterior surface;
- folding said sleeve forward portion back; and
- removably mounting said cover member on said container in said close covering relationship, thereby securing the folded-back sleeve forward portion against said exterior surface,
whereby said web end portion extending outwardly beyond said exit slot is light-shielded by the sleeve.

5. The method claimed in Claim 4, wherein said forming step includes:
- extruding an elongate tube (T) having a continuous, substantially cylindrical, thin, flexible wall of opaque plastic;
- flattening said tube to provide a flattened tube having substantially flat, closely facing top and bottom wall portions (Wt, Wb) seamlessly joined by folds extending along opposite lateral sides (Wf, Ws) thereof;
- cutting the flattened tube transversely to said lateral sides to provide a substantially rectangular sleeve of predetermined length (l) between opposite open ends (Oe) thereof;
- sealing one of said open ends closed to provide said closed leading end of the sleeve; and
- leaving the other of said open ends open to provide said open trailing end of the sleeve.

## Patentansprüche

1. Kassette mit einem lichtdichten Behälter (C), einer in dem Behälter drehbar gelagerten Rolle (R) eines lichtempfindlichen bahnförmigen Materials und einer biegbaren Umhüllung (E), wobei der lichtdichte Behälter einen Schlitz (S) aufweist, durch den das lichtempfindliche bahn2Qz1mige Material herausförderbar ist, und wobei die biegbare Umhüllung ein sich von der Rolle durch den Schlitz aus der Kassette heraus erstreckendes Vorlaufende (L) des bahnförmigen Materials lichtdicht abdeckt und eine biegbare, im wesentliche rechteckige, lichtundurchlässige Hülse (10) aufweist, die das Vorlaufende des bahnförmigen Materials umschließt und eine obere (12) und eine untere (14) Wandung umfaßt, die benachbart zueinander paßgenau einander gegenüberliegend angeordnet sind und sich zwischen ihren vorderen und hinteren Enden (12f, 12r, 14f, 14r) sowie ihren einander gegenüberliegenden Seiten (12s, 14s) erstrecken, **dadurch gekennzeichnet, daß**
- die Wandungen (12, 14) entlang ihren vorderen Enden (12f, 14f) und ihren Seiten (12s, 14s) lichtdicht aneinandergefügt sind, nicht jedoch entlang ihren hinteren Enden, sondern dort (12r, 14r) voneinander trennbar sind, um dazwischen eine Öffnung zu bilden, durch die das Vorlaufende des bahnförmigen Materials in Richtung der aneinadergefügten vorderen Enden in die Hülse einführbar ist, die sich mit dem in sie eingeführten Vorlaufende vom Inneren des Behälters durch den Schlitz hindurch nach außen erstreckt und einen hinteren (10i) und einen vorderen (10o) Abschnitt aufweist, die innerhalb bzw. außerhalb des Behälters liegen, sowie ein Abdeckelement (C3) für den Schlitz umfaßt, das auf dem Behälter angeordnet ist, den Schlitz abdeckt und über die Außenfläche (Fx) des Behälters hinausragt, wobei der aus dem Schlitz herausragende vordere Abschnitt der Hülse am Schlitz nach hinten geklappt und an der Außenfläche (Fx) des Behälters mittels des Abdeckelements befestigt ist, das leicht aus dem Behälter entfernbar ist, um die Entnahme der Hülse und des bahnförmigen Materials aus dem Behälter zu erleichtern.

2. Kassette nach Anspruch 1, dadurch gekennzeichnet, daß der hintere Abschnitt (10i) sich von den hinteren Enden (12r, 14r) der Wandungen nahe der im Behälter befindlichen Rolle (R) bis zum Schlitz (S) und der vordere Abschnitt (10o) sich vom Schlitz bis zu den aneinandergefügten vorderen Enden (42f, 14f) außerhalb des Behälters erstreckt, daß die Hülse eine sich von den hinteren bis zu den vorderen Enden erstreckende Gesamtlänge (101) aufweist und daß der sich von den hinteren Enden bis zum Schlitz erstreckende hintere Abschnitt der Hülse etwa der Hälfte bis zwei Dritteln der Gesamtlänge entspricht, wohingegen der sich vom Schlitz bis zu den vorderen Enden erstreckende vordere Abschnitt der Hülse etwa der Hälfte bis einem Drittel der Gesamtlänge entspricht.

3. Kassette nach Anspruch 1, dadurch gekennzeichnet, daß die Wandungen der Hülse aus einer dünnen, biegbaren, lichtundurchlässigen Kunststoffolie bestehen und daß die Kunststoffolie etwa 0,102 mm (0,004 Zoll) dick ist.

4. Verfahren zum lichtdichten Abdecken des Vorlaufendes (L) eines lichtempfindlichen bahnförmigen, auf eine Rolle (R) gewickelten Materials, wobei die Rolle in einem lichtdichten Behälter (C) einer Kassette drehbar gelagert ist und der Behälter einen Schlitz (S) aufweist, durch den das auf die Rolle aufgewickelte, lichtempfindliche bahnförmige Material herausförderbar ist, und wobei das Vorlaufende des bahnförmigen Materials sich durch den Schlitz hindurch nach außen erstreckt, **gekennzeichnet durch**
- Bilden einer biegbaren, im wesentlichen rechteckigen, lichtundurchlässigen Hülse (S), die eine obere (12) und eine untere (14) Wandung umfaßt, die benachbart zueinander paßgenau einander gegenüberliegend angeordnet sind und sich zwischen ihren vorderen und hinteren Enden (12f, 12r, 14f, 14r) sowie ihren einander gegenüberliegenden Seiten (12s, 14s) erstrecken, wobei die Hülse eine Gesamtlänge (101) aufweist, die sich zwischen dem vorderen und dem hinteren Ende erstreckt, und wobei die Wandungen entlang ihren vorderen Enden (12f, 14f) und ihren Seiten (12s, 14s) lichtdicht aneinandergefügt sind, nicht jedoch entlang ihren hinteren Enden (12r, 14r), sondern dort voneinander trennbar sind, wodurch die Hülse mit einem geschlossenen vorderen Ende, geschlossenen Seiten und einem offenen hinteren Ende versehen ist;
- Einführen des Vorlaufendes des bahnförmigen Materials in die Hülse durch das offene hintere Ende und Bewegen des eingeführten Vorlaufendes in Längsrichtung innerhalb der Hülse in Richtung des geschlossenen vorderen Endes bis hin zu einer Position nahe dem vorderen Ende;
- Lagern der Rolle (R) im Behälter (C), so daß die Hülse mit dem darin befindlichem Vorlaufende des bahnförmigen Materials einen hinteren (10i) und einen vorderen (10o) Abschnitt aufweist, die innerhalb bzw. außerhalb des Behälters liegen, wobei sich der hintere Abschnitt vom hinteren Ende der Hülse nahe der im Behälter befindlichen Rolle zum Schlitz hin erstreckt, der vordere Abschnitt sich vom Schlitz zum vorderen Ende der Hülse außerhalb des Behälters erstreckt und die Rolle im Behälter derart gelagert ist, daß der hintere Abschnitt der Hülse etwa der Hälfte bis zwei Dritteln der Gesamtlänge der Hülse entspricht, wohingegen der vordere Abschnitt der Hülse etwa der Hälfte bis einem Drittel der Gesamtlänge entspricht;
- Schließen des Behälters;
- Vorsehen eines Abdeckelements (C3) für den Schlitz, das auf dem Behälter entfernbar angeordnet ist und diesen und die Außenfläche dicht verschließt;
- Umklappen des vorderen Abschnitts der Hülse nach hinten; und
- entfernbares Anordnen des Abdeckelements auf dem Behälter, so daß dieser dicht verschlossen ist, und dadurch Befestigen des nach hinten umgeklappten vorderen Abschnitts der Hülse an der Außenfläche,
wodurch das sich durch den Schlitz hindurch nach außen erstreckende Vorlaufende des bahnförmigen Materials durch die Hülse lichtdicht abgedeckt ist.

5. Verfahren nach Anspruch 4, dadurch gekennzeichnet, daß das Bilden der Hülse folgende Schritte umfaßt:
- Extrudieren einer langgestreckten Röhre (T) aus einer durchgehenden, im wesentlichen zylindrischen, dünnen, biegbaren Wand eines lichtundurchlässigen Kunststoffs;
- Abflachen der Röhre, um eine abgeflachte Röhre mit im wesentlichen flachen, eng einander gegenüberliegenden oberen und unteren Wandabschnitten (Wt, Wb) zu bilden, die mittels sich entlang einander gegenüberliegender Seiten (Wf, Ws) erstreckender Falze nahtlos aneinandergefügt sind;
- Schneiden der abgeflachten Röhre quer zu den Seiten, um zwischen einander gegenüberliegenden offenen Enden (Oe) eine im wesentlichen rechteckige Hülse vorgegebener Länge (l) zu bilden;
- lichtdichtes Verschließen des einen offenen Endes, um das geschlossene vordere Ende der Hülse zu bilden; und
- Offenlassen des anderen offenen Endes, um das offene hintere Ende der Hülse zu bilden.

## Revendications

1. Cartouche comprenant une cassette étanche à la lumière (C), un rouleau de bande photosensible (R) monté de façon rotative à l'intérieur de ladite cassette étanche à la lumière, et une enveloppe souple (E), ladite cassette étanche à la lumière présentant une fente de sortie (S) au travers de laquelle ladite bande photosensible peut être retirée de ladite cassette étanche à la lumière, ladite enveloppe souple protégeant de la lumière une partie d'extrémité d'amorce (L) de ladite bande s'étendant depuis ledit rouleau au travers de ladite fente de sortie et vers l'extérieur de ladite cassette, ladite enveloppe comprenant un manchon opaque (10) pratiquement rectangulaire, souple, adapté pour enfermer ladite partie d'extrémité d'amorce de bande, ledit manchon comprenant des parois opposées de dessus (12) et de fond (14) disposées en une relation face à face adjacente et alignée, et s'étendant entre leurs extrémités antérieures et postérieures (12f, 12r, 14f, 14r) et des faces latérales opposées (12s, 14s) de celui-ci, caractérisée en ce que :
- lesdites parois (12, 14) sont jointes ensemble de façon étanche à la lumière le long de leurs extrémités antérieures (12f, 14f) et lesdites faces latérales (12s, 14s), mais restent écartées et séparables le long desdites extrémités postérieures (12r, 14r) afin de procurer une ouverture entre celles-ci au travers de laquelle ladite partie d'extrémité d'amorce de bande peut être insérée dans ledit manchon vers lesdites extrémités antérieures jointes, ledit manchon, avec ladite partie d'extrémité d'amorce de bande ainsi insérée dans celui-ci, s'étendant vers l'extérieur depuis l'intérieur de ladite cassette, au travers de ladite fente de sortie, et de ce fait à l'extérieur de ladite cassette, ledit manchon comprenant des parties arrières (10i) et avant (10o) disposées à l'intérieur et hors de ladite cassette, respectivement, un élément de protection de fente de sortie (C3) monté sur ladite cassette en relation de protection avec ladite fente de sortie (S) et s'étendant sur la surface extérieure (Fx) de la cassette, ladite partie avant dudit manchon s'étendant depuis ladite fente de sortie en étant repliée au niveau de ladite fente de sortie et fixée contre ladite surface extérieure (Fx) de ladite cassette par ledit élément de protection de fente de sortie, ledit élément de protection de fente de sortie étant facilement amovible de ladite cassette, afin de faciliter l'enlèvement dudit manchon et de ladite bande à partir de celle-ci.

2. Cartouche selon la revendication 1, dans laquelle ladite partie arrière (10i) s'étend depuis lesdites extrémités postérieures de paroi (12r, 14r) à proximité dudit rouleau (R) dans ladite cassette vers ladite fente de sortie (S), ladite partie avant (10o) s'étend depuis ladite fente de sortie vers lesdites extrémités antérieures jointes (12f, 14f) à l'extérieur de ladite cassette, et dans laquelle ledit manchon présente une longueur globale (101) s'étendant depuis lesdites extrémités postérieures vers lesdites extrémités antérieures, et dans laquelle ladite partie arrière dudit manchon s'étendant depuis lesdites extrémités postérieures vers ladite fente de sortie est approximativement d'une moitié aux deux tiers de ladite longueur globale, alors que ladite partie avant dudit manchon s'étendant depuis ladite fente de sortie vers lesdites extrémités antérieures est approximativement d'une moitié à un tiers de ladite longueur globale.

3. Cartouche selon la revendication 1, dans laquelle lesdites parois de manchon sont faites d'un matériau de feuille de matière plastique opaque, souple et mince, et dans laquelle ledit matériau de feuille est approximativement d'une épaisseur de 0,004 pouce (0,102 mm).

4. Procédé de masquage de la lumière d'une partie d'extrémité d'amorce (L) d'une bande photosensible provenant d'un rouleau de bande photosensible (R), le rouleau de bande photosensible étant monté de façon rotative à l'intérieur d'une cassette étanche à la lumière (C) d'une cartouche, la cassette étanche à la lumière comportant une fente de sortie (S) au travers de laquelle la bande photosensible provenant du rouleau peut être retirée, la partie d'extrémité d'amorce de bande s'étendant vers l'extérieur au travers et au-delà de la fente de sortie, comprenant les étapes consistant à :
- former un manchon (S) opaque, pratiquement rectangulaire, souple, avec des parois du dessus (12) et du dessous (14) qui s'étendent en relation face à face alignée, adjacente et se prolongent entre leurs extrémités postérieures et antérieures (12f, 12r, 14f, 14r) et des faces latérales opposées à celles-ci (12s, 14s), ledit manchon présentant une longueur globale (101) s'étendant entre lesdites extrémités antérieures et postérieures de celui-ci, lesdites parois étant jointes ensemble de façon étanche à la lumière suivant leurs extrémités antérieures (12f, 14f) et les faces latérales (12s, 14s), mais restant disjointes et pouvant être séparées le long de leurs extrémités postérieures (12r, 14r) en munissant ainsi le manchon d'une extrémité avant fermée, de faces latérales fermées, et d'une extrémité arrière ouverte,
- insérer la partie d'extrémité d'amorce de bande dans le manchon au travers de ladite extrémité arrière ouverte et déplacer la partie d'extrémité insérée, longitudinalement à l'intérieur du manchon en direction de ladite extrémité d'amorce fermée à une position à l'intérieur de celui-ci qui est à proximité de ladite extrémité d'amorce,
- monter le rouleau (R) dans ladite cassette (C) de sorte que le manchon, comportant ladite partie d'extrémité d'amorce de bande dans celui-ci, comprend des parties arrière (10i) et avant (10o) disposées à l'intérieur et à l'extérieur de ladite cassette, respectivement, ladite partie arrière s'étendant depuis l'extrémité arrière du manchon à proximité du rouleau à l'intérieur de ladite cassette vers ladite fente de sortie, la partie avant s'étendant depuis ladite fente de sortie vers l'extrémité avant du manchon à l'extérieur de ladite cassette, ledit rouleau étant monté dans ladite cassette de sorte que ladite partie arrière du manchon soit approximativement d'une moitié à deux tiers de la longueur globale dudit manchon, alors que ladite partie avant du manchon est approximativement d'une moitié à un tiers de ladite longueur globale,
- refermer ladite cassette,
- prévoir un élément de protection de fente de sortie (C3) qui peut être monté de façon amovible sur ladite cassette en relation de protection proche de ladite fente de sortie et de ladite surface extérieure,
- replier ladite partie avant du manchon, et
- monter de façon amovible ledit élément de protection sur ladite cassette suivant ladite relation de protection proche, en fixant ainsi la partie avant du manchon repliée contre ladite surface extérieure,
d'où il résulte que ladite partie d'extrémité de bande s'étendant vers l'extérieur au-delà de ladite fente de sortie est masquée de la lumière par le manchon.

5. Procédé selon la revendication 4, dans lequel ladite étape de formation comprend :
- l'extrusion d'un tube allongé (T) présentant une paroi souple, mince, pratiquement cylindrique, continue de matière plastique opaque,
- aplatir ledit tube pour procurer un tube aplati présentant des parties de paroi supérieure et inférieure se faisant face de façon rapprochée, pratiquement plates (Wt, Wb) jointes sans soudure par des plis s'étendant le long de faces latérales opposées (Wf, Ws) de celles-ci.
- découper le tube aplati transversalement vers lesdites faces latérales afin de procurer un manchon pratiquement rectangulaire de longueur prédéterminée (1) entre des extrémités opposées (Oe) de celui-ci,
- sceller l'une desdites extrémités ouvertes en position fermée afin de procurer ladite extrémité avant fermée du manchon, et
- laisser ouverte l'autre desdites extrémités ouvertes afin de réaliser ladite extrémité arrière ouverte du manchon.
